# EUROPEAN PATENT APPLICATION

(11) **EP 4 495 824 A1**
(43) Date of publication of application: **22.01.2025**
(21) Application number: 22939114.9
(22) Date of filing: 28.04.2022
(51) Int. Cl.: G06F 40/289

(54) **CONVERSION METHOD AND APPARATUS FOR NATURAL LANGUAGE SENTENCE, AND STORAGE MEDIUM**

(71) Applicant: Siemens Aktiengesellschaft, 80333 München (DE); Siemens Ltd., China, Chaoyang District Beijing 100102 (CN)
(72) Inventor: ZHOU, Zhenhua, Shanghai 200120 (CN)
(74) Representative: Isarpatent
(86) International application number: PCT/CN2022/089977
(87) International publication number: WO 2023/206262

(57) **Abstract**

Disclosed in the embodiments of the present application are a conversion method and apparatus for a natural language sentence, and a storage medium. The method comprises: determining a first mapping relationship between a subject in a natural language sentence and a function block header of a function block, wherein the subject corresponds to a resource in a work cell; determining a second mapping relationship between a predicate in the natural language sentence and a function block name of the function block, wherein the predicate corresponds to a service operation of the resource; and on the basis of the first mapping relationship and the second mapping relationship, converting the natural language sentence into the function block, or converting the function block into the natural language sentence, wherein the function block is presented as a function block type diagram, the function block is adapted to describe a workflow, and the workflow represents the resource executing the service operation. A natural language sentence can be converted into a function block that is presented as a function block type diagram, thereby improving the efficiency of workflow execution.

## Description

### TECHNICAL FIELD

Embodiments of the present application relate to the field of industry technologies, and in particular, to a conversion method and apparatus for a natural language sentence, and a storage medium.

### BACKGROUND

Workflows can be simply defined as description of a series of operations. Workflows are widely used in fields such as automation systems, artificial intelligence, and robotics. For example, a workflow of a product sorting line in an automation system can be simply described as starting, photographing, sorting, and moving products to target locations. A model deployment workflow in the field of artificial intelligence can be described as data collection, data annotation, model training, and model deployment.

However, currently these workflows only have text descriptions. If users want to execute these workflows, the users need to follow the text descriptions and may use a variety of engineering tools. However, these tools are almost unrelated to each other and provide completely different user operation behaviors. This is not only a challenge to users, but also greatly increases costs, reduces efficiency, and limits flexibility due to a long development cycle. For example, in the field of artificial intelligence, users need to use a tool for data collection, perform data annotation manually or by using other tools, write python scripts for model training, and need deployment tools for deployment.

To this end, persons skilled in the art are still working on finding other workflow solutions.

### SUMMARY

Embodiments of the present application provide a conversion method and apparatus for a natural language sentence, and a storage medium.

According to a first aspect, an implementation of the present invention proposes a conversion method for a natural language sentence. The method includes:
determining a first mapping relationship between a subject in a natural language sentence and a function block header of a function block, where the subject corresponds to a resource in a work cell; determining a second mapping relationship between a predicate in the natural language sentence and a function block name of the function block, where the predicate corresponds to a service operation of the resource; and on the basis of the first mapping relationship and the second mapping relationship, converting the natural language sentence into the function block, or converting the function block into the natural language sentence, where the function block is presented as a function block type diagram, the function block is adapted to describe a workflow, and the workflow represents the resource executing the service operation.

It can be seen that in the implementations of the present invention, conversion between a natural language sentence and a function block that is presented as a function block type diagram can be implemented, thereby improving the efficiency of workflow execution.

In an implementation, the method further includes: determining a third mapping relationship between an adverbial in the natural language sentence and input data of the function block; and in a process of converting the natural language sentence into the function block, converting the adverbial into the input data of the function block based on the third mapping relationship, or in a process of converting the function block into the natural language sentence, converting the input data of the function block into the adverbial of the natural language sentence based on the third mapping relationship.

Therefore, the implementation of the present invention can implement conversion between the adverbial and the input data of the function block based on the mapping relationship between the input data of the function block and the adverbial, thereby enriching capability of describing the workflow by a natural language.

In an implementation, the method further includes: determining a fourth mapping relationship between an object in the natural language sentence and an information part of the function block; and in a process of converting the natural language sentence into the function block, converting the object into the information part of the function block based on the fourth mapping relationship, or in a process of converting the function block into the natural language sentence, converting the information part of the function block into the object of the natural language sentence based on the fourth mapping relationship.

Therefore, the implementation of the present invention can implement conversion between the object and the information part of the function block based on the mapping relationship between the information part of the function block and the object, thereby enriching capability of describing the workflow by a natural language.

In an implementation, the method further includes: determining a fifth mapping relationship between a first complement in the natural language sentence and output data of the function block; and in a process of converting the natural language sentence into the function block, converting the first complement into the output data of the function block based on the fifth mapping relationship, or in a process of converting the function block into the natural language sentence, converting the output data of the function block into the first complement of the natural language sentence based on the fifth mapping relationship.

Therefore, the implementation of the present invention can implement conversion between the complement and the output data of the function block based on the mapping relationship between the output data of the function block and the complement, thereby enriching capability of describing the workflow by a natural language.

In an implementation, the method further includes: determining a sixth mapping relationship between a second complement in the natural language sentence and the information part of the function block; and in a process of converting the natural language sentence into the function block, converting the second complement into the information part of the function block based on the sixth mapping relationship, or in a process of converting the function block into the natural language sentence, converting the information part of the function block into the second complement of the natural language sentence based on the sixth mapping relationship.

Therefore, the implementation of the present invention can implement conversion between the complement and the information part of the function block based on the mapping relationship between the information part of the function block and the complement, thereby enriching capability of describing the workflow by a natural language.

In an implementation, the method further includes: determining a seventh mapping relationship between a label in the natural language sentence and an instruction label of the function block, where the label in the natural language sentence is generated based on an execution order of the natural language sentence; and in a process of converting the natural language sentence into the function block, converting the label in the natural language sentence into the instruction label of the function block based on the seventh mapping relationship, or in a process of converting the function block into the natural language sentence, converting the instruction label of the function block into the label in the natural language sentence based on the seventh mapping relationship.

It can be seen that based on the mapping relationship between the label in the natural language sentence generated based on the execution order of the natural language sentence and the instruction label of the function block, conversion between the instruction label and the label can be implemented, which improves the control capability of the function block.

In an implementation, the method further includes at least one of the following: determining an eighth mapping relationship between an attributive in the natural language sentence and the information part of the function block; and in a process of converting the natural language sentence into the function block, converting the attributive into the information part of the function block based on the eighth mapping relationship, or in a process of converting the function block into the natural language sentence, converting the information part of the function block into the attributive of the natural language sentence based on the eighth mapping relationship; and determining a ninth mapping relationship between an annotation in the natural language sentence and an annotation part of the function block; and in a process of converting the natural language sentence into the function block, converting the annotation in the natural language sentence into the annotation part of the function block based on the ninth mapping relationship, or in a process of converting the function block into the natural language sentence, converting the annotation part of the function block into the annotation in the natural language sentence based on the ninth mapping relationship.

It can be seen that the implementation of the present invention further expands the definition of semantic elements and provides support for necessary low-code components such as attributives.

In an implementation, the method further includes: converting the function block that is presented in the function block type diagram into the function block that is presented in a label diagram. Therefore, the implementation of the present invention can also convert the natural language sentence into the function block that is presented in a label diagram.

In an implementation, the method further includes: sequentially connecting function blocks based on an order of instruction labels included in the function blocks. It can be seen that the implementation of the present invention can connect multiple function blocks based on instruction labels to combine into a workflow with complex control functions.

According to a second aspect, an implementation of the present invention proposes a conversion apparatus for a natural language sentence. The apparatus includes: a first determination module, configured to determine a first mapping relationship between a subject in a natural language sentence and a function block header of a function block, where the subject corresponds to a resource in a work cell; a second determination module, configured to determine a second mapping relationship between a predicate in the natural language sentence and a function block name of the function block, where the predicate corresponds to a service operation of the resource; and a conversion module, configured to: on the basis of the first mapping relationship and the second mapping relationship, convert the natural language sentence into the function block, or convert the function block into the natural language sentence, where the function block is presented as a function block type diagram, the function block is adapted to describe a workflow, and the workflow represents the resource executing the service operation.

In an implementation, the apparatus further includes: a third determination module, configured to determine a third mapping relationship between an adverbial in the natural language sentence and input data of the function block; where the conversion module is configured to: in a process of converting the natural language sentence into the function block, convert the adverbial into the input data of the function block based on the third mapping relationship, or in a process of converting the function block into the natural language sentence, convert the input data of the function block into the adverbial of the natural language sentence based on the third mapping relationship.

In an implementation, the apparatus further includes: a third determination module, configured to determine a fourth mapping relationship between an object in the natural language sentence and an information part of the function block; where the conversion module is configured to: in a process of converting the natural language sentence into the function block, convert the object into the information part of the function block based on the fourth mapping relationship, or in a process of converting the function block into the natural language sentence, convert the information part of the function block into the object of the natural language sentence based on the fourth mapping relationship.

In an implementation, the apparatus further includes: a third determination module, configured to determine a fifth mapping relationship between a first complement in the natural language sentence and output data of the function block; where the conversion module is configured to: in a process of converting the natural language sentence into the function block, convert the first complement into the output data of the function block based on the fifth mapping relationship, or in a process of converting the function block into the natural language sentence, convert the output data of the function block into the first complement of the natural language sentence based on the fifth mapping relationship.

In an implementation, the apparatus further includes: a third determination module, configured to determine a sixth mapping relationship between a second complement in the natural language sentence and the information part of the function block; where the conversion module is configured to: in a process of converting the natural language sentence into the function block, convert the second complement into the information part of the function block based on the sixth mapping relationship, or in a process of converting the function block into the natural language sentence, convert the information part of the function block into the second complement of the natural language sentence based on the sixth mapping relationship.

In an implementation, the apparatus further includes: a third determination module, configured to determine a seventh mapping relationship between a label in the natural language sentence and an instruction label of the function block, where the label in the natural language sentence is generated based on an execution order of the natural language sentence; where the conversion module is configured to: in a process of converting the natural language sentence into the function block, convert the label in the natural language sentence into the instruction label of the function block based on the seventh mapping relationship, or in a process of converting the function block into the natural language sentence, convert the instruction label of the function block into the label in the natural language sentence based on the seventh mapping relationship.

According to a third aspect, an implementation of the present invention proposes a conversion apparatus for a natural language sentence, including: at least one memory, configured to store computer readable code; and at least one processor, configured to call the computer readable code to execute the steps of any one of the foregoing conversion methods for a natural language sentence.

According to a fourth aspect, an implementation of the present invention proposes a computer readable medium, where the computer readable medium stores computer readable instructions, and when the computer readable instructions are executed by a processor, the processor is enabled to execute the steps of any one of the foregoing conversion methods for a natural language sentence.

According to a fifth aspect, an implementation of the present invention proposes a computer program product, where the computer program product is tangibly stored on a computer readable medium and includes computer readable instructions, and when the computer readable instructions are executed, at least one processor is enabled to execute the steps of any one of the foregoing conversion methods for a natural language sentence.

### BRIEF DESCRIPTION OF THE DRAWINGS

FIG. 1 shows an example of building a behavior tree based on function block nodes of a function block type diagram;

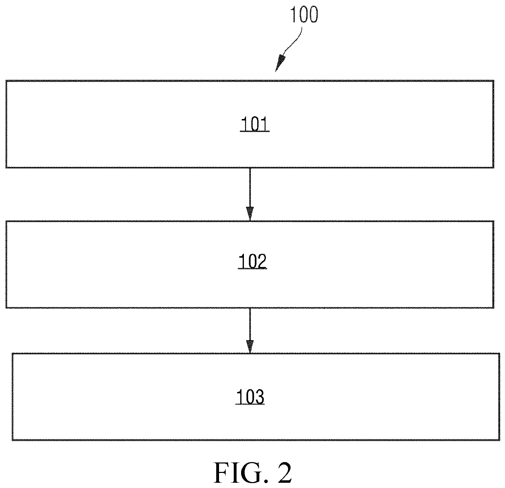

FIG. 2 is an exemplary flowchart of a conversion method for a natural language sentence according to an embodiment of the present application;
FIG. 3 is a schematic diagram of conversion between code-free semantic and a low-code function block type diagram (FBTD) according to an embodiment of the present application;
FIG. 4 is an exemplary schematic diagram of a process of conversion between multiple natural language sentences and a low-code workflow including multiple function blocks according to an embodiment of the present application;
FIG. 5 is a schematic diagram of interaction based on a language element library according to an embodiment of the present application;
FIG. 6 is an exemplary structural diagram of a conversion apparatus for a natural language sentence according to embodiments of the present application; and
FIG. 7 is an exemplary structural diagram of a conversion apparatus for a natural language sentence with a memory-processor structure according to embodiments of the present application.

Reference numerals are as follows:

| | |
|---|---|
| 201 | Function block name |
| 202 | Function block header |
| 203 | Link input port |
| 204 | Link output port |
| 205 | Link connection |
| 206 | Sensitive area |
| 207 | Instruction label |
| 208 | Input data chunk |
| 209 | Output data chunk |
| 210 | Data input port |
| 211 | Data output port |
| 212 | Data connection |
| 213 | Function block icon |
| 214 | Function block body |
| 100 | Conversion method for a natural language sentence |
| 101 to 103 | Step |
| 400 | Language element library |
| 401 | Subject placeholder |
| 402 | Predicate placeholder |
| 403 | Adverbial placeholder |
| 404 | Object placeholder |
| 405 | Logical placeholder |
| 406 | Annotation placeholder |
| 407 | Semantic expression placeholder |
| 408 | Exception placeholder |
| 409 | Key point placeholder |
| 410 | Attached image placeholder |
| 411 | Video placeholder |
| 412 | Attributive placeholder |
| 413 | Complement placeholder |
| 414 | Automatic generation processing |
| 415 | Automatic label generation processing |
| 416 | Automatic preposition generation processing |
| 417 | Label |
| 418 | Subject library |
| 419 | Natural language sentence after determining a subject |
| 420 | Natural language sentence after dragging in a predicate placeholder |
| 421 | Predicate library |
| 422 | Natural language sentence after determining a predicate |
| 730 | Function block |
| 731 | Function block header |
| 732 | Function block name |
| 733 | Annotation part |
| 734 | Information part |
| 735 | Instruction label |
| 736 and 737 | Input data |
| 738, 739, and 740 | Output data |
| 700 | Conversion apparatus for a natural language sentence |
| 701 | First determination module |
| 702 | Second determination module |
| 703 | Converter |
| 704 | Third determination module |
| 500 | Conversion apparatus for a natural language sentence |
| 501 | Memory |
| 502 | Processor |

### DETAILED DESCRIPTION

A subject described in this specification is discussed now with reference to exemplary implementations. It should be understood that the discussion of these implementations only intends to help a person skilled in the art better understand and implement the subject matter described in this specification, and does not intend to limit the protection scope, applicability, or examples set forth in the claims. Changes may be made to the functions and arrangements of the discussed elements without departing from the protection scope of the content of the embodiments of the present application. Various processes or components may be omitted, replaced, or added in each example according to requirements. For example, the described method may be performed according to a sequence different from the sequence described herein, and steps may be added, omitted, or combined. In addition, features described in some examples may also be combined in other examples.

As used in this specification, the term "include" and variants thereof represent open terms, and means "include but is not limited to". The term "based on" means "at least partially based on". The terms "one embodiment" and "an embodiment" represent "at least one embodiment". The term "another embodiment" represents "at least one another embodiment". The terms "first", "second", and the like may represent different objects or the same object. Other definitions may be included explicitly or implicitly in the following. Unless otherwise clearly specified, the definition of one term is consistent in the entire specification.

First, an exemplary description of specific content related to a function block is given.

Currently, a workflow can be represented by using a behavior tree. A workflow is used to define operations to be performed by a work cell. For example, a workflow can represent a distributed process within a work cell. During specific implementation, the workflow can also be subdivided into a main workflow and a sub-workflow. The main workflow is used to define the start and end, and trigger other flow control of the entire process of the work cell. The main workflow is the entry of the entire process and is linked to at least one sub-workflow. A sub-workflow is usually a primary workflow, and each sub-workflow corresponds to a sub-process and is used to implement specific service operations. A behavior tree is a formal graphical modeling method. Behavior trees are widely used in various types of artificial intelligent decision-making. Since most logic is set according to rules, the judgment of behavior is like a tree with many branches of judgment. The behavior of the behavior tree is on the leaf node and is the actual behavior logic to be executed. Judgment branches are executed from top to bottom until the leaf node, and a behavior node finally determined as return success is subject to logic execution to achieve decision-making. This is the basic principle of the behavior tree. Through the behavior tree approach, clearly defined symbols can be used to clearly express relevant requirements of a software integration system. The structure of the behavior tree is organized in the form of a tree. Each node has a corresponding node type and carries different functions in conjunction with related parameters. A component editor may be used to provide users with an intuitive and visual behavior tree editor. By using the behavior tree editor, users can quickly edit behavior trees. For example, after starting the behavior tree editor, a new behavior tree can be created, and then a behavior tree node type may be selected into the behavior tree.

Properties of behavior tree nodes that make up the behavior tree can also be edited.

Behavior tree nodes can include: flow control nodes and function block nodes (or referred to as function blocks). The function block node is configured to execute commands and implement service operations in the workflow. Normally, if the operation is completed correctly, success is returned. If the operation fails, failure is returned. When the operation is in progress, running is returned.

Function block nodes can include logical nodes, and can also include some specific types of function block nodes, such as part or all of manual nodes, dynamic nodes, delay nodes, and idle nodes. Dynamic nodes are configured to dynamically inject node instances at runtime. Manual nodes represent manual steps, and stop at the current node before obtaining a confirmation signal, and exit after obtaining a confirmation signal. Delay nodes mean exiting the current node after delaying a specified time. Idle nodes mean that no operation is performed and can be replaced by any function block node. Each logical node can correspond to an operation template, and each operation template predefines operations that can be performed by at least one type of resource (for example, a device type such as a collaborative robot type or a PLC type). For example, the operation can include: an action, a method, or a skill. During specific implementation, each operation template can include an interface part and an implementation part. The implementation part can be an application program (for example, a containerized application program) that includes functional code and running dependencies. The application program can run independently and is exposed to the outside world through a specific network communication interface. The interface part can be logical nodes presented as graphical elements, that is, like other behavior tree nodes, can be dragged, dropped, connected, and configured in a graphical user interface. In specific implementation, each logical node can have a parameter panel for configuring parameters of the logical node, such as input and output parameters. Certainly, these input and output parameters can also be preset with default values. Each logical node can be configured and executed independently. When a logical node in the behavior tree is executed, the input configured by the user for the logical node is read and transferred to the implementation part of the operation template, that is, the corresponding application program. After completing a specific operation such as model conversion, the operation result such as the converted model is converted back to the output of the logical node. The interface part and the implementation part of each operation template can be stored separately. For example, the node library can only store the interface part, that is, the logical node, the implementation part can be stored in a node service module, and the node service module can be called a runtime. The node service module can be located on a server or locally. Optionally, the logical node follows an information model interacting with the runtime of the main controller.

Each function block node can be associated with a resource node to instantiate the function block node into an operation of a corresponding resource. For example, the logical node can be associated with a device resource node to instantiate as an operation of the corresponding device. During specific implementation, a resource header can be set for the function block node, and a resource associated with the function block node is displayed in the resource header. Alternatively, the function block node may not be associated with a resource node in advance, and instead the function block node is associated with a corresponding resource node as needed when creating the behavior tree. Alternatively, there may be both function block nodes that are associated with resource nodes in advance (which can be called dedicated function block nodes) and function block nodes that are not associated with resource nodes in advance (which can be called general function block nodes). This is because although the general function block node is not associated with on-site resources, this does not affect the simulation of the workflow corresponding to the behavior tree including the function block node. For example, a collaborative robot may not have been purchased yet. In order to verify the implementability, the corresponding general function block node can be used for simulation in advance. When the implementability is determined, the purchase can be started.

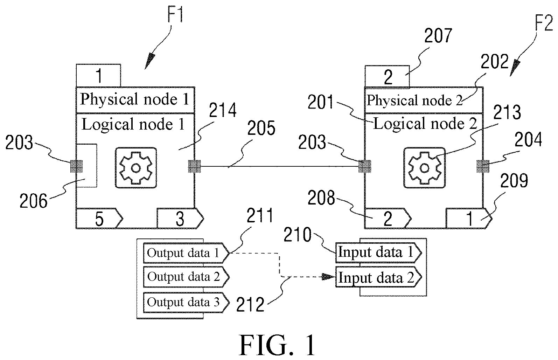

FIG. 1 shows an example of building a behavior tree based on function block nodes of a function block type diagram. In this example, two function block nodes F1 and F2 with similar structures are shown. As shown in FIG. 1, each function block node can include:
1) A function block name 201 used to indicate a type of a service operation. For example, the function block name is generally a logical node, and may include: screw fastening, image collection, video recording, visual guidance, and the like. The function block name is editable but should be unique within the current global workflow.
2) A function block header 202 used to indicate a resource executing a service operation. Generally, the function block header 202 of a logical node is a physical node (that is, a resource). For example, a resource that performs screw tightening is a torque wrench, a resource that performs image acquisition is a monitor, a resource that performs video recording is a monitor, and a resource that performs visual guidance is a camera. As mentioned above, the resources indicated by the function block header 202 may be associated in advance, or the association of the corresponding resource may be completed through resource configuration after adding the function block node.
3) A link input port 203 and a link output port 204 used to trigger link connection. In this embodiment, a wiring operation of the function block node may include: a wiring operation between the link output port 204 and the link input port 203 between the two function block nodes F1 and F2. Through this wiring operation, a link connection 205 is established between the two function block nodes F1 and F2. The link connection 205 in this example is a one-way connection used to indicate the workflow running process, for example, can indicate an execution order of two function block nodes, that is, the function block node F1 on the left is executed first and then the function block node F2 on the right is executed.
   During specific implementation, in order to avoid click selection errors and improve the wiring sensitivity of the function block node, there can be a sensitive area 206 within the setting range of the link input port 203, which is called a first sensitive area herein, so that when user click selection and wiring operations are received in the first sensitive area, a wiring endpoint is positioned on the link input port 203. Similarly, there can be a sensitive area within the setting range of the link output port 204 (not shown in the figure), which is called a second sensitive area herein, so that when user click selection and wiring operations are received in the second sensitive area, a wiring endpoint is positioned on the link output port 204. In addition, in this embodiment, in response to the wiring operation between the link output port 204 and the link input port 203 between the two function block nodes F1 and F2, an instruction label 207 used to indicate the execution order of the function block nodes is generated for the interconnected function block nodes F1 and F2, and the instruction label 207 is marked on the function block type diagram of the function block nodes F1 and F2, as shown as 1 and 2 in FIG. 1. In addition, the instruction label 207 can also be used as an index for jump instruction and as a chapter index for documentation.
4) An input data chunk 208 used to indicate a set of all data input ports and an output data chunk 209 used to indicate a set of all data output ports. In this embodiment, the number of data input ports of the function block node can be marked on the input data chunk 208, such as 5 on the input data chunk 208 of the function block node F1 and 2 on the input data chunk 208 of the function block node F2. If the number of data input ports is zero, the input data chunk 208 can be hidden. Similarly, the number of data output ports of the function block node can be marked on the output data chunk 209, such as 3 on the output data chunk 209 of the function block node F1 and 1 on the output data chunk 209 of the function block node F2. If the number of data output ports is zero, the output data chunk 209 can be hidden.
5) A data input port 210 and a data output port 211 used to trigger data transmission. In this embodiment, a wiring operation of the function block node may further include: a wiring operation between the data output port 211 and the data input port 210 between corresponding data of the two function block nodes F1 and F2. Through this wiring operation, a data connection 212 is established between the two function block nodes F1 and F2. The data connection 212 in this example is used to indicate data transfer between the two function block nodes F1 and F2. During specific implementation, similar to the link input/output port, in order to avoid click selection errors and improve the wiring sensitivity of the function block node, there can be a sensitive area within the setting range of the data input port 210 (not shown in the figure), which is called a third sensitive area herein, so that when user click selection and wiring operations are received in the third sensitive area, a wiring endpoint is positioned on the data input port 210. Similarly, there can be a sensitive area within the setting range of the data output port 211 (not shown in the figure), which is called a fourth sensitive area herein, so that when user click selection and wiring operations are received in the fourth sensitive area, a wiring endpoint is positioned on the data output port 211.
6) A function block icon 213. Specifically, the function block icon 213 may be a vector icon 213, used to visually represent the service operations of the function block node. Certainly, in other implementations, the function block icon 213 may also be omitted.
7) A function block body 214 used to carry each of the above components. In this embodiment, the adding operation of the function block node may include: a drag operation on the function block body 214.

The implementation of the present invention proposes a solution for conversion between a natural language sentence describing a workflow and a function block in the workflow.

In the implementation of the present invention, the natural language sentence to be converted can be determined based on a placeholder determination operation in the natural language sentence (for example, the placeholder determination operation includes: based on a user drag operation, selecting a placeholder corresponding to a sentence component and moving a position of the placeholder in the natural language sentence) and a placeholder occupancy operation (for example, the placeholder occupancy operation includes: determining, based on a user input, a corresponding sentence component occupying the placeholder). Alternatively, the natural language sentence to be converted can also be generated based on other natural language generation methods (for example, based on voice inputs or artificial neural networks). The implementation of the present invention can implement conversion between code-free natural language sentences and low-code function blocks, facilitating user flexible selection.

FIG. 1 is an exemplary flowchart of a conversion method for a natural language sentence according to an embodiment of the present application. The method 100 includes:
Step 101: Determine a first mapping relationship between a subject in a natural language sentence and a function block header of a function block, where the subject corresponds to a resource in a work cell.

A work cell can be a combination of resources such as systems or equipment that can implement a relatively complete and independent control process and operation. For example, in the field of industrial technologies, the work cell can be defined based on actual industrial scenarios, for example, it can be defined that a process corresponds to a work cell, or it can be defined that a work station in a process is a work cell, or it can be defined that a work position in a work station corresponds to a work cell. Different work cells have different process flows.

The resource may be a resource in a work cell according to the embodiments of the present application, or may be a resource in a resource library in other types of low-code platforms. Considering that service operations may be performed by different subjects, these subjects may be, for example, specific physical devices, persons, or other virtualized noun resources. For convenience of description, in the implementation of the present invention, these physical equipment, persons, and virtualized noun resources can be collectively referred to as resources. These resources usually refer to various operating entities that can execute workflows on site. During specific implementation, the resources used as operating entities can be used as a common configuration parameter of the function block, and corresponding resource configuration is performed for the function block as needed when creating the behavior tree. Alternatively, when creating a function block, a resource used as an operating entity is configured for the function block, so that when creating the behavior tree, there is no need to configure a resource for the function block as needed. Alternatively, in order to facilitate the management of resources, these resources can also be represented in the form of resource nodes, and these resource nodes can be stored in the form of resource knowledge graphs. The resource knowledge graph includes: resource nodes and connection lines representing relationships between resource nodes.

In step 101, the determining a first mapping relationship between a subject in a natural language sentence and a function block header of a function block includes: extracting the subject in the natural language sentence; establishing a correspondence between the subject and the resource in the work cell; and creating the first mapping relationship between the subject and the function block header of the function block.

A specific manner of extracting the subject in the natural language sentence may include: (1) based on a semantic recognition method, recognizing the subject in the natural language sentence; and (2) determining the subject based on an operation related to a subject placeholder, where the operation related to the subject placeholder includes: selecting the subject placeholder and moving a position of the subject placeholder in the natural language sentence based on a user drag operation; and determining the subject based on a subject placeholder occupation operation, for example, determining, based on a user input from a subject library corresponding to many resources, the subject occupying the subject placeholder, that is, determining the resource corresponding to the subject.

Step 102: Determine a second mapping relationship between a predicate in the natural language sentence and a function block name of the function block, where the predicate corresponds to a service operation of the resource.

For example, service operations are specific operations performed by resources, for example, can include specific operations such as screw tightening, image collection, video recording, and visual guidance.

In step 102, the determining the second mapping relationship between the predicate in the natural language sentence and the function block name of the function block includes: extracting the predicate from the natural language sentence; corresponding the predicate to the service operation of the resource; and creating the second mapping relationship between the predicate and the function block name of the function block.

A specific manner of extracting the predicate in the natural language sentence may include: (1) based on a semantic recognition method, recognizing the predicate in the natural language sentence; and (2) determining the predicate based on an operation related to a predicate placeholder, where the operation related to the predicate placeholder includes: selecting the predicate placeholder and moving a position of the predicate placeholder in the natural language sentence based on a user drag operation; and determining the predicate based on a predicate placeholder occupancy operation (for example, the predicate placeholder occupancy operation includes: determining, based on a user input from a predicate library corresponding to the subject, a service operation occupying the predicate placeholder).

Step 103: On the basis of the first mapping relationship and the second mapping relationship, convert the natural language sentence into the function block, or convert the function block into the natural language sentence, where the function block is presented as a function block type diagram, the function block is adapted to describe a workflow, and the workflow represents the resource executing the service operation.

Herein, when a natural language sentence needs to be converted into a function block, a function block header corresponding to the subject is determined based on the first mapping relationship, a function block name corresponding to the predicate is determined based on the second mapping relationship, and then the function block header and the function block name are combined into the function block. When a function block needs to be converted into a natural language sentence, a subject corresponding to the function block header is determined based on the first mapping relationship, a predicate corresponding to the function block name is determined based on the second mapping relationship, and then the subject and the predicate are combined into the natural language sentence.

It can be seen that in the implementations of the present invention, conversion between a natural language sentence and a function block that is presented as a function block type diagram can be implemented, thereby improving the efficiency of workflow execution.

In an implementation, the method 100 further includes: determining a third mapping relationship between an adverbial in the natural language sentence and input data of the function block; and in a process of converting the natural language sentence into the function block, converting the adverbial into the input data of the function block based on the third mapping relationship, or in a process of converting the function block into the natural language sentence, converting the input data of the function block into the adverbial of the natural language sentence based on the third mapping relationship. Similarly, the input data of the function block can participate in combining into the function block, and the adverbial can participate in combining into the natural language sentence.

Therefore, the implementation of the present invention can implement conversion between the adverbial and the input data of the function block based on the mapping relationship between the input data of the function block and the adverbial, thereby enriching capability of describing the workflow by a natural language.

In an implementation, the method 100 further includes: determining a fourth mapping relationship between an object in the natural language sentence and an information part of the function block; and in a process of converting the natural language sentence into the function block, converting the object into the information part of the function block based on the fourth mapping relationship, or in a process of converting the function block into the natural language sentence, converting the information part of the function block into the object of the natural language sentence based on the fourth mapping relationship. Similarly, the information part of the function block can participate in combining into the function block, and the object can participate in combining into the natural language sentence.

Therefore, the implementation of the present invention can implement conversion between the object and the information part of the function block based on the mapping relationship between the information part of the function block and the object, thereby enriching capability of describing the workflow by a natural language.

In an implementation, the method 100 further includes: determining a fifth mapping relationship between a first complement in the natural language sentence and output data of the function block; and in a process of converting the natural language sentence into the function block, converting the first complement into the output data of the function block based on the fifth mapping relationship, or in a process of converting the function block into the natural language sentence, converting the output data of the function block into the first complement of the natural language sentence based on the fifth mapping relationship. Similarly, the output data of the function block can participate in combining into the function block, and the first complement can participate in combining into the natural language sentence. Herein, the first complement is associated with the output data of the function block for further description of the workflow process. For example, when the service operation performed by the function block is "pick&place", the output data includes a number of picked items, and then the first complement is the number of picked items. In this way, the first complement can be used in the natural language sentence to describe the number of picked items in the service operation.

Therefore, the implementation of the present invention can implement conversion between the complement and the output data of the function block based on the mapping relationship between the output data of the function block and the complement, thereby enriching capability of describing the workflow by a natural language.

In an implementation, the method 100 further includes: determining a sixth mapping relationship between a second complement in the natural language sentence and the information part of the function block; and in a process of converting the natural language sentence into the function block, converting the second complement into the information part of the function block based on the sixth mapping relationship, or in a process of converting the function block into the natural language sentence, converting the information part of the function block into the second complement of the natural language sentence based on the sixth mapping relationship. Similarly, the information part of the function block can participate in combining into the function block, and the second complement can participate in combining into the natural language sentence. Herein, the second complement is associated with the information part of the function block for further description of the workflow process. For example, when the service operation performed by the function block is "pick&place", the information part includes a destination of a picked item. The first complement is related to the internal implementation logic of the function block and can represent the output data. The second complement is independent of the internal implementation logic of the function block and is used for a complete description of the workflow.

Therefore, the implementation of the present invention can implement conversion between the complement and the information part of the function block based on the mapping relationship between the information part of the function block and the complement, thereby enriching capability of describing the workflow by a natural language.

In an implementation, the method 100 further includes: determining a seventh mapping relationship between a label in the natural language sentence and an instruction label of the function block, where the label in the natural language sentence is generated based on an execution order of the natural language sentence; and in a process of converting the natural language sentence into the function block, converting the label in the natural language sentence into the instruction label of the function block based on the seventh mapping relationship, or in a process of converting the function block into the natural language sentence, converting the instruction label of the function block into the label in the natural language sentence based on the seventh mapping relationship. Similarly, the instruction label of the function block can participate in combining into the function block, and the label can participate in combining into the natural language sentence.

It can be seen that based on the mapping relationship between the label in the natural language sentence generated based on the execution order of the natural language sentence and the instruction label of the function block, conversion between the instruction label and the label can be implemented, which improves the control capability of the function block.

In an implementation, the method 100 further includes at least one of the following: determining an eighth mapping relationship between an attributive in the natural language sentence and the information part of the function block; and in a process of converting the natural language sentence into the function block, converting the attributive into the information part of the function block based on the eighth mapping relationship, or in a process of converting the function block into the natural language sentence, converting the information part of the function block into the attributive of the natural language sentence based on the eighth mapping relationship; and determining a ninth mapping relationship between an annotation in the natural language sentence and an annotation part of the function block; and in a process of converting the natural language sentence into the function block, converting the annotation in the natural language sentence into the annotation part of the function block based on the ninth mapping relationship, or in a process of converting the function block into the natural language sentence, converting the annotation part of the function block into the annotation in the natural language sentence based on the ninth mapping relationship. Similarly, the information part or the annotation part of the function block can participate in combining into the function block, and the attributive or annotation can participate in combining into the natural language sentence. It can be seen that the implementation of the present invention further expands the definition of semantic elements and provides support for necessary low-code components such as attributives.

In an implementation, the method 100 further includes: converting the function block that is presented in the function block type diagram into the function block that is presented in a label diagram. Therefore, the implementation of the present invention can also convert the natural language sentence into the function block that is presented in a label diagram.

In an implementation, the method 100 further includes: sequentially connecting function blocks based on an order of instruction labels included in the function blocks. It can be seen that the implementation of the present invention can connect multiple function blocks based on instruction labels to combine into a workflow with complex control functions.

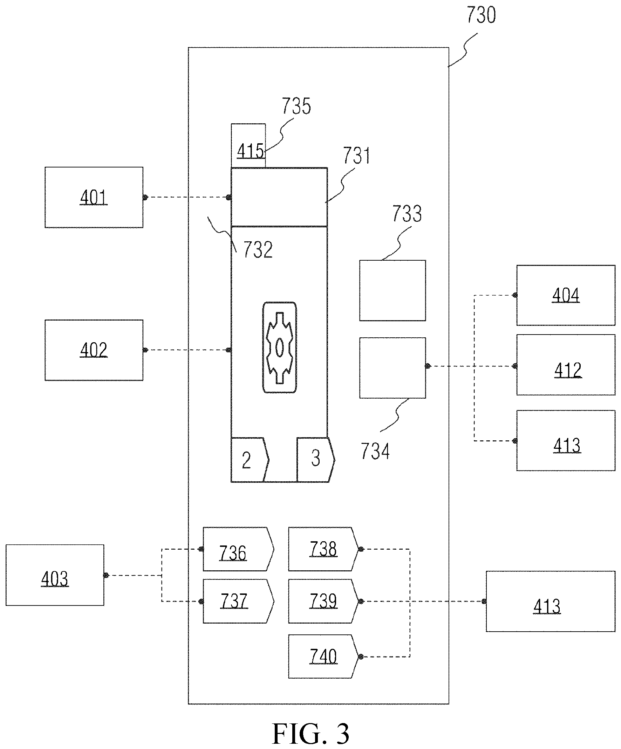

FIG. 3 is a schematic diagram of conversion between code-free semantic and a low-code FBTD according to an embodiment of the present application. There is a first mapping relationship between a subject occupying a subject placeholder 401 in a natural language sentence and a function block header 731 of a function block 730, where the subject corresponds to a resource that is in a work cell and that is used to indicate execution of a service operation. There is a second mapping relationship between a predicate occupying a predicate placeholder 402 and a function block name 732 of the function block 730, where the predicate corresponds to the service operation of the resource. The function block name 732 is used to indicate a type of the service operation. The function block name 732 may include: screw fastening, image collection, video recording, visual guidance, and the like. The function block name is editable but should be unique within the current global workflow.

Based on the first mapping relationship and the second mapping relationship, the natural language sentence can be converted into the function block 730, or the function block 730 can be converted into the natural language sentence. The function block 731 is presented in a function block type diagram. The function block 731 is adapted to describe the workflow. The workflow represents the resource (that is, the subject in the natural language sentence) executing the service operation (that is, the predicate in the natural language sentence).

The function block 730 has two pieces of input data: input data 736 and input data 737. The function block 730 has three pieces of output data: output data 738, output data 739, and output data 740. The function block 730 instructs the resource to execute the service operation using input data 736 and input data 737 to obtain output data 738, output data 739, and output data 740. The function block 730 further has an information part 734, and content of the information part 734 can be determined based on user editing.

There is a third mapping relationship between an adverbial occupying an adverbial placeholder 403 in the natural language sentence and the input data 736 or the input data 737 of the function block 730. In a process of converting the natural language sentence into the function block 730, the adverbial is converted into the input data 736 or the input data 737 of the function block 730 based on the third mapping relationship, or in a process of converting the function block 730 into the natural language sentence, the input data 736 or the input data 737 of the function block 730 is converted into the adverbial occupying the adverbial placeholder 403 in the natural language sentence based on the third mapping relationship.

There is a fourth mapping relationship between an object occupying an object placeholder 404 in the natural language sentence and the information part 734 of the function block 730. In a process of converting the natural language sentence into the function block 730, the object is converted into the information part 734 of the function block 730 based on the fourth mapping relationship, or in a process of converting the function block 730 into the natural language sentence, the information part 734 of the function block 730 is converted into the object of the natural language sentence based on the fourth mapping relationship.

There is a fifth mapping relationship between a first complement occupying a complement placeholder 413 in the natural language sentence and the output data 738, the output data 739, or the output data 740 of the function block 730. In a process of converting the natural language sentence into the function block 730, the first complement is converted into the output data 738, the output data 739, or the output data 740 of the function block 730 based on the fifth mapping relationship, or in a process of converting the function block 730 into the natural language sentence, the output data 738, the output data 739, or the output data 740 of the function block 730 is converted into the first complement of the natural language sentence based on the fifth mapping relationship.

There is a sixth mapping relationship between a second complement occupying another complement placeholder 413 in the natural language sentence and the information part 734 of the function block 730. In a process of converting the natural language sentence into the function block 730, the second complement is converted into the information part 734 of the function block 730 based on the sixth mapping relationship, or in a process of converting the function block 730 into the natural language sentence, the information part 734 of the function block 730 is converted into the second complement of the natural language sentence based on the sixth mapping relationship.

There is a seventh mapping relationship between a label occupying a label placeholder 415 in the natural language sentence and an instruction label 735 of the function block 730, where the label is generated based on an execution order of the natural language sentence. In a process of converting the natural language sentence into the function block 730, the label in the natural language sentence is converted into the instruction label 735 of the function block based on the seventh mapping relationship, or in a process of converting the function block 730 into the natural language sentence, the instruction label 735 of the function block 730 is converted into the label in the natural language sentence based on the seventh mapping relationship.

There is an eighth mapping relationship between an attributive occupying an attributive placeholder 412 in the natural language sentence and the information part 734 of the function block 730. In a process of converting the natural language sentence into the function block 730, the attributive is converted into the information part 734 of the function block 730 based on the eighth mapping relationship, or in a process of converting the function block 730 into the natural language sentence, the information part 734 of the function block 730 is converted into the attributive of the natural language sentence based on the eighth mapping relationship.

There is a ninth mapping relationship between an annotation occupying an annotation placeholder 406 in the natural language sentence and an annotation part 733 of the function block 730. In a process of converting the natural language sentence into the function block 730, the annotation in the natural language sentence is converted into the annotation part 733 of the function block 730 based on the ninth mapping relationship, or in a process of converting the function block 730 into the natural language sentence, the annotation part 733 of the function block 730 is converted into the annotation in the natural language sentence based on the ninth mapping relationship.

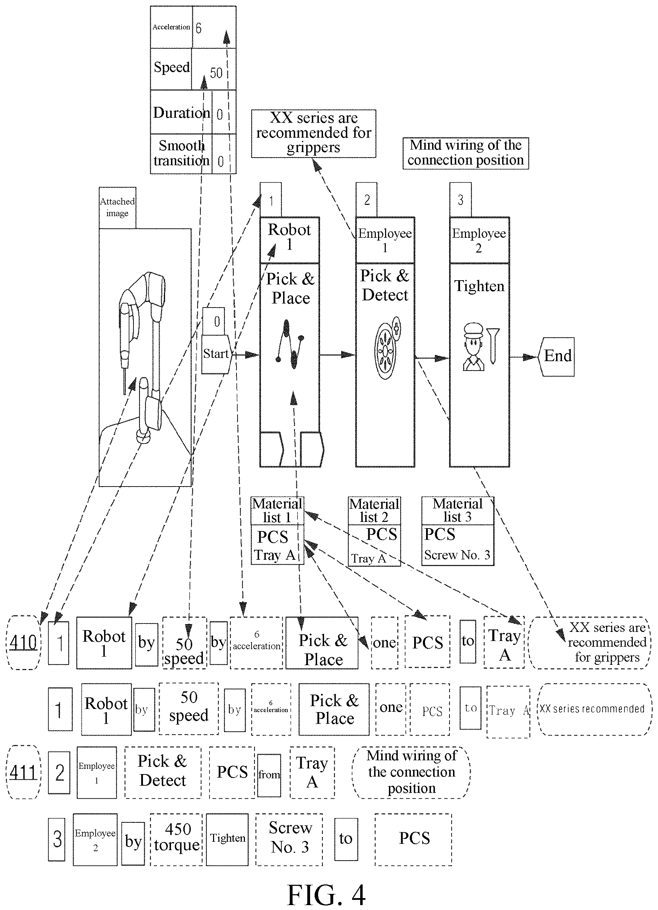

FIG. 4 is an exemplary schematic diagram of a process of conversion between multiple natural language sentences and a low-code workflow including multiple function blocks according to an embodiment of the present application. A material table in FIG. 4 corresponds to the information part of the function block.

Specifically, the natural language sentence includes three sentences. According to the order of the labels of the sentences, these three sentences are:
(1) sentence 1 corresponding to label 1: robot 1 by 50 speed by 6 acceleration pick&place one PCS to tray A: XA series recommended (annotation).
(2) sentence 2 corresponding to label 2: employee 1 pick&detect PCS from tray A: mind wiring of the connection position.
(3) sentence 3 corresponding to label 3: employee 2 with torque 450 tighten screw No. 3 to PCS.

In sentence 1, subject: robot 1; predicate: pick&place; adverbial: at speed 50 and acceleration 6; object: a circuit board; complement: tray A; and annotation: XA series are recommended for grippers. In sentence 2, subject: employee 1; predicate: pick and detect; object: a circuit board; complement: tray A; and annotation: mind wiring of the connection position. In sentence 3, subject: employee 2; predicate: tighten; object: screw No. 3; and complement: a circuit board.

Sentence (1) is converted into a first function block of instruction label 1. For the first function block: the function block header is robot 1: the service operation is pick&place; the input data of the function block includes acceleration 6 and speed 50; the information part includes: a circuit board and tray A; the instruction label is 1; and the annotation part is: XA series are recommended for grippers.

Sentence (2) is converted into a second function block of instruction label 2. For the second function block: the function block header is employee 1; the service operation is pick and detect; the information part includes: a circuit board and tray A; the instruction label is 2; and the annotation part is: mind wiring of the connection position.

Sentence (3) is converted into a third function block of instruction label 3. For the third function block: the function block header is employee 2; the service operation is tightening; input data includes torque 450; and the information part includes: screw No. 3 and a circuit board.

Then, based on the order of the instruction labels included in function blocks, function blocks are connected sequentially, thereby implementing a workflow including multiple natural language sentences. Moreover, each natural language sentence can be expressed in a specified language (for example, Chinese or English).

The above exemplarily describes the process of conversion between multiple natural language sentences and a low-code workflow including multiple function blocks. Those skilled in the art can realize that this description is only exemplary and is not intended to limit the scope of protection of implementations of the present invention.

In the implementation of the present invention, a method of describing a workflow (such as an IT/OT process) as a natural language using semantic language elements is also provided. These semantic language elements can come from a predetermined word library. In the implementation of the present invention, semantic standard operating procedure (SOP) or more general local languages can be inputted for low-code platforms, the conversion method shown in FIG. 1 is applied to map natural language sentences into low-code workflows, and generated low-code workflows are ultimately executed at runtime. Moreover, the implementation of the present invention expands the definition of semantic language elements and provides support for necessary low-code components such as behavior tree logic, semantic expressions, exceptions, key points, annotations, drawings, videos, and index marks. Therefore, conversion between semantic no-code representation of workflows and low-code representation of workflows (such as: FBTDs and IoT behavior trees) is possible.

Specifically, the embodiments of the present application provide a method for generating a natural language sentence describing a workflow. The method includes:
Step 1: Determine a subject placeholder based on a first selection operation on a language element library.

Herein, the language element library includes multiple types of placeholders. The placeholders include respective type attributes, and each placeholder is adapted to be occupied by sentence components matching this type attribute.

For example, the sentence components of modern Chinese usually include a subject, a predicate, an object, a verb, an attributive, an adverbial, a complement, and a headword. Therefore, the Chinese language element library can include: a subject placeholder, a predicate placeholder, an object placeholder, a verb placeholder, an attributive placeholder, an adverbial placeholder, a complement placeholder, and a headword placeholder. Similarly, the sentence components of an English sentence usually include a subject, a predicate, an object, a predicative, an attributive, an adverbial, a complement, and an appositive. Correspondingly, the English language element library can include: a subject placeholder, a predicate placeholder, an object placeholder, a predicative placeholder, an attributive placeholder, an adverbial placeholder, a complement placeholder, and an appositive placeholder.

The user can select the subject placeholder from the language element library and drag the subject placeholder to the natural language sentence editing interface to determine the subject placeholder.

Step 2: Determine, from a subject library associated with the subject placeholder, a subject occupying the subject placeholder, where the subject corresponds to a resource.

Herein, the subject library associated with the subject placeholder can be displayed in a new pop-up window, and the subject occupying the subject placeholder is determined from the subject library based on user selection, that is, the resource is determined, such as the resource in the work cell. Optionally, the subject library can also be displayed through a drop-down menu.

Step 3: Determine a predicate placeholder based on a second selection operation on a language element library.

Similarly, the user can select the predicate placeholder from the language element library and drag the predicate placeholder to the natural language sentence editing interface to determine the predicate placeholder.

Step 4: Determine, from a predicate library associated with the subject, a predicate occupying the predicate placeholder, where the predicate corresponds to a service operation of a resource.

Herein, the predicate library associated with the subject can be displayed in a new pop-up window, and the predicate occupying the predicate placeholder is determined from the predicate library based on user selection, that is, a service operation that may be performed by the resource is determined. Optionally, the predicate library can also be displayed through a drop-down menu.

Step 5: Generate a natural language sentence based on the occupied subject placeholder and the occupied predicate placeholder, where the natural language sentence is adapted to be converted into a low-code representation describing a workflow, and the workflow represents the resource executing a service operation.

The generated natural language sentence instructs the resource to execute the service operation and can therefore be converted into a low-code representation describing the workflow. It can be seen that in the implementation of the present invention, based on the operation on the placeholder and the library, semantic language elements can be conveniently used to describe the workflow as natural language sentences. People without programming knowledge can use natural language sentences to conveniently describe workflows, reducing the difficulty of workflow implementation. Moreover, based on the conversion method for a natural language sentence shown in FIG. 1, the natural language sentence can be converted into a low-code representation that can be recognized by an underlying device (for example, a workflow including function blocks presented in a function block type diagram or a label diagram), further enriching the implementation of workflows.

In an implementation, the method for generating a natural language sentence describing the workflow further includes at least one of the following: (1) determining an object placeholder based on a third selection operation on a language element library; and determining, from a material list associated with the service operation, an object occupying the object placeholder, where the object serves as an execution target of the service operation; (2) determining an adverbial placeholder based on a fourth selection operation on a language element library; and determining, based on input data of the service operation, an adverbial occupying the adverbial placeholder; (3) determining a complement placeholder based on a fifth selection operation on a language element library; and determining, from a material list associated with the service operation, a complement occupying the complement placeholder, where the complement serves as complementary description of the service operation; (4) determining an attributive placeholder based on a sixth selection operation on a language element library; and determining, from a material list inputted by the user or associated with the service operation, an attributive occupying the attributive placeholder, where the attributive serves as restrictive description of the subject or the object; (5) determining an annotation placeholder based on a seventh selection operation on a language element library; and determining, based on a user input, an annotation occupying the annotation placeholder; (6) determining an attached image placeholder based on an eighth selection operation on a language element library; and determining, based on a user input, an attached image occupying the attached image placeholder; (7) determining a video placeholder based on a ninth selection operation on a language element library; and determining, based on a user input, a video occupying the video placeholder.

In an implementation, the method for generating a natural language sentence describing the workflow further includes: determining a logical placeholder and a semantic expression placeholder based on a tenth selection operation on the language element library; determining, based on a user input, a logical keyword occupying the logical placeholder and a semantic expression occupying the semantic expression placeholder; determining logical execution branches based on the logical keyword and the semantic expression; and determining a natural language sentence corresponding to each logical execution branch. For example, the logical keyword can be a logical keyword in conditional judgment (If-Then-Else), or can be compound logic (such as Switch-Case-Default, Fallback or Guard). A logical value corresponding to the semantic expression (usually true or false) is calculated, and logic determined based on the logical keyword is used to select the preset logical execution branch corresponding to the logical value.

In an implementation, the method for generating a natural language sentence describing the workflow further includes: based on an execution order of natural language sentences, generating labels of the natural language sentences. In an implementation, the method for generating a natural language sentence describing the workflow further includes: determining an exception placeholder based on an eleventh selection operation on the language element library; determining, based on a user input, a label corresponding to the exception placeholder; selecting an exception type from an exception library corresponding to the exception placeholder; determining an exception execution branch when an exception type occurs during the execution of the natural language sentence of the label; and determining a natural language sentence corresponding to the exception execution branch. For example, exception types include overheating and overvoltage. Correspondingly, the exception execution branch includes the exception handling process when overheating occurs and the exception handling process when overvoltage occurs.

In an implementation, the method for generating a natural language sentence describing the workflow further includes: determining a key point placeholder based on a twelfth selection operation on the language element library; and determining, based on a user input, a key point occupying the key point placeholder. The low-code representation includes controls that correspond to key points, where when the control is triggered, a next key point after the key point in the workflow is executed. Therefore, the implementation of the present invention further expands the definition of semantic elements and provides support for necessary low-code components such as behavior tree logic, semantic expressions, exceptions, key points, annotations, drawings, videos, and indexes.

In an implementation, the method for generating a natural language sentence describing the workflow further includes: receiving a change request for an occupied subject placeholder in the natural language sentence; displaying a subject library based on the change request; determining an updated subject that occupies the subject placeholder from the subject library, where the updated subject corresponds to an updated resource in the work cell; displaying a predicate library associated with the updated subject; determining, from a predicate library associated with the updated subject, an updated predicate occupying the predicate placeholder, where the updated predicate corresponds to an updated service operation of a resource; and updating the natural language sentence based on the subject placeholder occupied after the update and the predicate placeholder occupied after the update. It can be seen that in the implementation of the present invention, the subject can be conveniently changed to change the resources in the workflow. In an implementation, the method for generating a natural language sentence describing the workflow further includes: receiving a change request for an occupied predicate placeholder in the natural language sentence; based on the change request, displaying a predicate library associated with the subject; determining, from a predicate library, an updated predicate occupying the predicate placeholder, where the updated predicate corresponds to an updated service operation of a resource; and updating the natural language sentence based on the subject placeholder occupied and the predicate placeholder occupied after the update. It can be seen that in the implementation of the present invention, the predicate can be conveniently changed to change the service operations in the workflow.

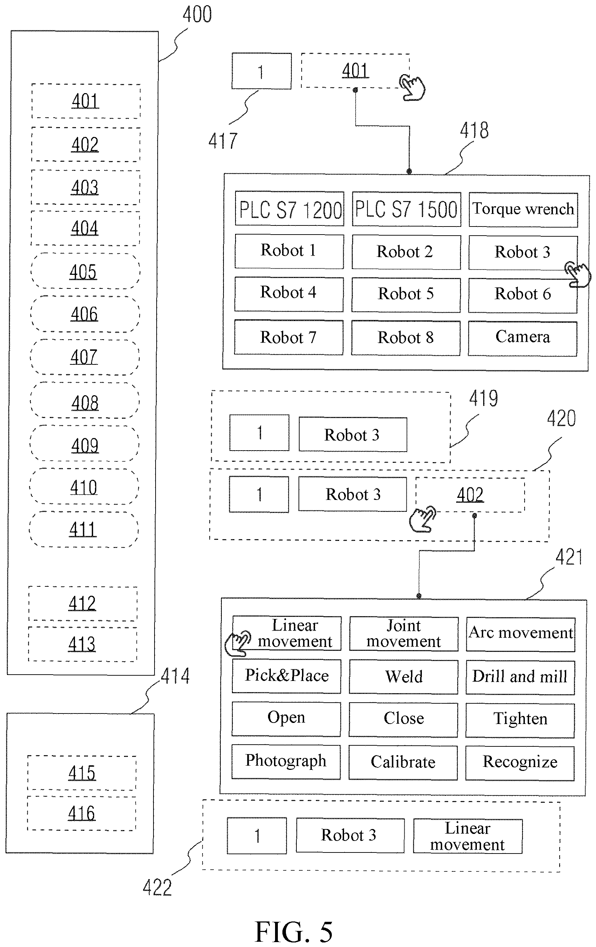

FIG. 5 is a schematic diagram of interaction based on a language element library according to an embodiment of the present application. FIG. 5 shows a language element library 400. The language element library 400 includes a subject placeholder 401, a predicate placeholder 402, an adverbial placeholder 403, an object placeholder 404, a logical placeholder 405, an annotation placeholder 406, a semantic expression placeholder 407, an exception placeholder 408, a key point placeholder 409, an attached image placeholder 410, a video placeholder 411, an attributive placeholder 412, and a complement placeholder 413. The interactive process also includes automatic label generation processing 415 and automatic preposition generation processing 416. The automatic preposition generation process 416 can generate prepositions for natural language sentences to improve readability. The automatic label generation processing 415 automatically generates a label 417 for the natural language sentence based on the execution order of natural language sentences.

The user drags any placeholder from the language element library 400 to the natural language sentence editing interface. As shown in FIG. 4B, the user first drags in the subject placeholder 401, and a label 417 is automatically generated for the natural language sentence. In this case, the subject library 418 is displayed, so that the user can select the subject occupying the subject placeholder 401 from the subject library 418. Assuming that the user selects "robot 3", "robot 3" occupies the subject placeholder 401, and a natural language sentence 419 after the subject is determined is obtained. Then, the user continues to drag in the predicate placeholder 402 after "robot 3" in the natural language sentence 419 obtained after determining the subject, to obtain a natural language sentence 420 after dragging in the predicate placeholder. The predicate library 421 associated with "robot 3" (that is, the service operations that "robot 3" can perform) is displayed, so that the user can select the predicate occupying the predicate placeholder 402 from the predicate library 421. Assuming that the user selects "linear movement", "linear movement" occupies the predicate placeholder 402, to obtain the natural language sentence 422 after determining the predicate.

In this case, the user can click on "robot 3" to display the subject library 418 again, thereby helping the user to change the subject. Accordingly, the user can click on "linear movement" to display the predicate library 421 again, thereby helping the user to change the predicate.

The natural language sentence determined based on the above method can be converted into an FBTD according to the method flow shown in FIG. 1.

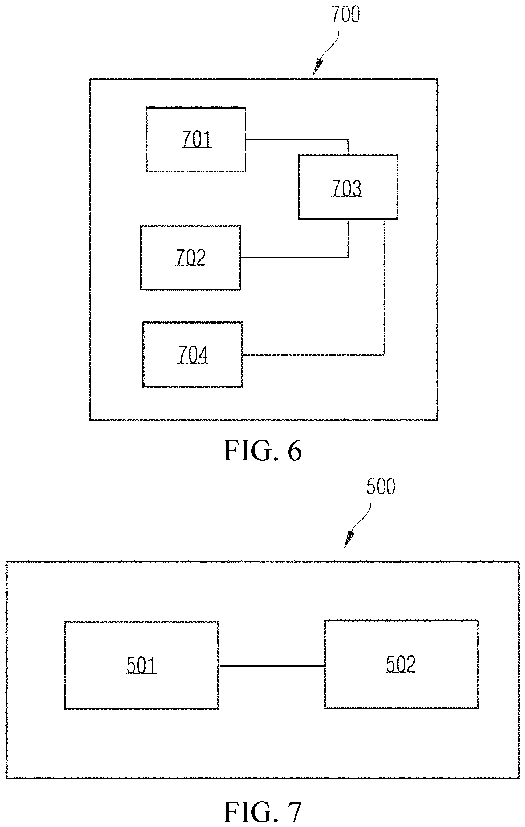

FIG. 6 is an exemplary structural diagram of a conversion apparatus for a natural language sentence according to embodiments of the present application. As shown in FIG. 6, the conversion apparatus 700 for a natural language sentence includes: a first determination module 701, configured to determine a first mapping relationship between a subject in a natural language sentence and a function block header of a function block, where the subject corresponds to a resource in a work cell; a second determination module 702, configured to determine a second mapping relationship between a predicate in the natural language sentence and a function block name of the function block, where the predicate corresponds to a service operation of the resource; and a conversion module 703, configured to: on the basis of the first mapping relationship and the second mapping relationship, convert the natural language sentence into the function block, or convert the function block into the natural language sentence, where the function block is presented as a function block type diagram, the function block is adapted to describe a workflow, and the workflow represents the resource executing the service operation.

In an exemplary implementation, the apparatus 700 further includes: a third determination module 704, configured to determine a third mapping relationship between an adverbial in the natural language sentence and input data of the function block; where the conversion module 703 is configured to: in a process of converting the natural language sentence into the function block, convert the adverbial into the input data of the function block based on the third mapping relationship, or in a process of converting the function block into the natural language sentence, convert the input data of the function block into the adverbial of the natural language sentence based on the third mapping relationship.

In an exemplary implementation, the apparatus 700 further includes: a third determination module 704, configured to determine a fourth mapping relationship between an object in the natural language sentence and an information part of the function block; where the conversion module 703 is configured to: in a process of converting the natural language sentence into the function block, convert the object into the information part of the function block based on the fourth mapping relationship, or in a process of converting the function block into the natural language sentence, convert the information part of the function block into the object of the natural language sentence based on the fourth mapping relationship.

In an exemplary implementation, the apparatus 700 further includes: a third determination module 704, configured to determine a fifth mapping relationship between a first complement in the natural language sentence and output data of the function block; where the conversion module 703 is configured to: in a process of converting the natural language sentence into the function block, convert the first complement into the output data of the function block based on the fifth mapping relationship, or in a process of converting the function block into the natural language sentence, convert the output data of the function block into the first complement of the natural language sentence based on the fifth mapping relationship.

In an exemplary implementation, the apparatus 700 further includes: a third determination module 704, configured to determine a sixth mapping relationship between a second complement in the natural language sentence and the information part of the function block; where the conversion module 703 is configured to: in a process of converting the natural language sentence into the function block, convert the second complement into the information part of the function block based on the sixth mapping relationship, or in a process of converting the function block into the natural language sentence, convert the information part of the function block into the second complement of the natural language sentence based on the sixth mapping relationship.

In an exemplary implementation, the apparatus 700 further includes: a third determination module 704, configured to determine a seventh mapping relationship between a label in the natural language sentence and an instruction label of the function block, where the label in the natural language sentence is generated based on an execution order of the natural language sentence; where the conversion module 703 is configured to: in a process of converting the natural language sentence into the function block, convert the label in the natural language sentence into the instruction label of the function block based on the seventh mapping relationship, or in a process of converting the function block into the natural language sentence, convert the instruction label of the function block into the label in the natural language sentence based on the seventh mapping relationship.

FIG. 7 is an exemplary structural diagram of a conversion apparatus for a natural language sentence with a memory-processor structure according to embodiments of the present application. The apparatus 500 includes: at least one memory 501 and at least one processor 502. The at least one processor 502 is configured to call a computer program stored in the at least one memory 501 to execute the conversion method for a natural language sentence in the embodiments of the present application.

Specifically, a system or an apparatus with a storage medium may be provided. Computer readable code for implementing functions of any one of the embodiments described above is stored on the storage medium, and a computer (or a CPU or an MPU) of the system or apparatus is enabled to read and execute the computer readable code stored in the storage medium. In addition, some or all of the actual operations can also be completed by using an operating system or the like operating on the computer through instructions based on computer readable code. In addition, the computer readable code read from the storage medium is written into a memory provided in an expansion board inserted into the computer or written into a memory provided in an expansion unit connected to the computer, then a CPU installed on the expansion board or the expansion unit is enabled to execute some or all of the actual operations based on an instruction of the computer readable code, thereby implementing functions of any one of the implementations described above. In this embodiment, embodiments of the computer readable medium include, but are not limited to, floppy disks, CD-ROMs, magnetic disks, optical disks (such as CD-ROMs, CD-Rs, CD-RWs, DVD-ROMs, DVD-RAMs, DVD-RWs, DVDs+RWs), memory chips, ROMs, RAMs, ASICs, configured processors, all-optical media, all magnetic tape or other magnetic media, or any other media from which a computer processor can read instructions. In addition, various other forms of computer-readable media can be used to send or carry instructions to a computer, including routers, private or public networks, or other wired and wireless transmission devices or channels, for example, a communications network can download a computer readable instruction from a server computer or the cloud. Instructions can include code in any computer programming language, including C, C++, C language, Visual Basic, Java, and JavaScript.

It should be noted that, not all steps and modules in the procedures and the diagrams of the system structures are necessary, and some steps or modules may be omitted according to an actual requirement. An execution order of the steps is not fixed and may be adjusted according to a requirement. The system structure described in the various embodiments above may be a physical structure and may also be a logical structure, that is, some modules may be implemented by the same physical entity, or some modules may be implemented separately by multiple physical entities, or may be implemented together by some components in multiple independent devices.

The foregoing descriptions are merely preferred embodiments of the present disclosure,
but are not intended to limit the present disclosure. Any modification, equivalent replacement, or improvement made within the spirit and principle of the present disclosure shall fall within the protection scope of the present disclosure.

## Claims

1. A conversion method (100) for a natural language sentence, comprising:
determining a first mapping relationship between a subject in a natural language sentence and a function block header of a function block, wherein the subject corresponds to a resource in a work cell (101);
determining a second mapping relationship between a predicate in the natural language sentence and a function block name of the function block, wherein the predicate corresponds to a service operation of the resource (102);
based on the first mapping relationship and the second mapping relationship, converting the natural language sentence into the function block, or converting the function block into the natural language sentence, wherein the function block is presented in the form as a function block type diagram, the function block is adapted to describe a workflow, and the workflow represents the resource executing the service operation (103).

2. The method (100) according to claim 1, further comprising:
determining a third mapping relationship between an adverbial in the natural language sentence and input data of the function block;
in a process of converting the natural language sentence into the function block, converting the adverbial into the input data of the function block based on the third mapping relationship, or in a process of converting the function block into the natural language sentence, converting the input data of the function block into the adverbial of the natural language sentence based on the third mapping relationship.

3. The method (100) according to claim 1 or 2, further comprising:
determining a fourth mapping relationship between an object in the natural language sentence and an information part of the function block;
in a process of converting the natural language sentence into the function block, converting the object into the information part of the function block based on the fourth mapping relationship, or in a process of converting the function block into the natural language sentence, converting the information part of the function block into the object of the natural language sentence based on the fourth mapping relationship.

4. The method (100) according to any one of claims 1 to 3, further comprising:
determining a fifth mapping relationship between a first complement in the natural language sentence and output data of the function block;
in a process of converting the natural language sentence into the function block, converting the first complement into the output data of the function block based on the fifth mapping relationship, or in a process of converting the function block into the natural language sentence, converting the output data of the function block into the first complement of the natural language sentence based on the fifth mapping relationship.

5. The method (100) according to any one of claims 1 to 4, further comprising:
determining a sixth mapping relationship between a second complement in the natural language sentence and the information part of the function block;
in a process of converting the natural language sentence into the function block, converting the second complement into the information part of the function block based on the sixth mapping relationship, or in a process of converting the function block into the natural language sentence, converting the information part of the function block into the second complement of the natural language sentence based on the sixth mapping relationship.

6. The method (100) according to any one of claims 1 to 5, further comprising:
determining a seventh mapping relationship between a label in the natural language sentence and an instruction label of the function block, wherein the label in the natural language sentence is generated based on an execution order of the natural language sentence;
in a process of converting the natural language sentence into the function block, converting the label in the natural language sentence into the instruction label of the function block based on the seventh mapping relationship, or in a process of converting the function block into the natural language sentence, converting the instruction label of the function block into the label in the natural language sentence based on the seventh mapping relationship.

7. The method (100) according to any one of claims 1 to 6, further comprising at least one of the following:
determining an eighth mapping relationship between an attributive in the natural language sentence and the information part of the function block; and in a process of converting the natural language sentence into the function block, converting the attributive into the information part of the function block based on the eighth mapping relationship, or in a process of converting the function block into the natural language sentence, converting the information part of the function block into the attributive of the natural language sentence based on the eighth mapping relationship;
determining a ninth mapping relationship between an annotation in the natural language sentence and an annotation part of the function block; and in a process of converting the natural language sentence into the function block, converting the annotation in the natural language sentence into the annotation part of the function block based on the ninth mapping relationship, or in a process of converting the function block into the natural language sentence, converting the annotation part of the function block into the annotation in the natural language sentence based on the ninth mapping relationship.

8. The method (100) according to any one of claims 1 to 7, further comprising:
converting the function block that is presented in the form of a function block type diagram into the function block that is presented in the form of a label diagram.

9. The method (100) according to any one of claims 1 to 8, further comprising:
sequentially connecting function blocks based on an order of instruction labels comprised in the function blocks.

10. A conversion apparatus (700) for a natural language sentence, comprising:
a first determination module (701), configured to determine a first mapping relationship between a subject in a natural language sentence and a function block header of a function block, wherein the subject corresponds to a resource in a work cell;
a second determination module (702), configured to determine a second mapping relationship between a predicate in the natural language sentence and a function block name of the function block, wherein the predicate corresponds to a service operation of the resource; and
a conversion module (703), configured to: on the basis of the first mapping relationship and the second mapping relationship, convert the natural language sentence into the function block, or convert the function block into the natural language sentence, wherein the function block is presented as a function block type diagram, the function block is adapted to describe a workflow, and the workflow represents the resource executing the service operation.

11. The apparatus (700) according to claim 10, further comprising:
a third determination module (704), configured to determine a third mapping relationship between an adverbial in the natural language sentence and input data of the function block; wherein
the conversion module (703) is configured to: in a process of converting the natural language sentence into the function block, convert the adverbial into the input data of the function block based on the third mapping relationship, or in a process of converting the function block into the natural language sentence, convert the input data of the function block into the adverbial of the natural language sentence based on the third mapping relationship.

12. The apparatus (700) according to claim 10 or 11, further comprising:
a third determination module (704), configured to determine a fourth mapping relationship between an object in the natural language sentence and an information part of the function block;
wherein
the conversion module (703) is configured to: in a process of converting the natural language sentence into the function block, convert the object into the information part of the function block based on the fourth mapping relationship, or in a process of converting the function block into the natural language sentence, convert the information part of the function block into the object of the natural language sentence based on the fourth mapping relationship; and

13. The apparatus (700) according to any one of claims 10 to 12, further comprising:
a third determination module (704), configured to determine a fifth mapping relationship between a first complement in the natural language sentence and output data of the function block; wherein
the conversion module (703) is configured to: in a process of converting the natural language sentence into the function block, convert the first complement into the output data of the function block based on the fifth mapping relationship, or in a process of converting the function block into the natural language sentence, convert the output data of the function block into the first complement of the natural language sentence based on the fifth mapping relationship.

14. The apparatus (700) according to any one of claims 10 to 13, further comprising:
a third determination module (704), configured to determine a sixth mapping relationship between a second complement in the natural language sentence and the information part of the function block; wherein
the conversion module (703) is configured to: in a process of converting the natural language sentence into the function block, convert the second complement into the information part of the function block based on the sixth mapping relationship, or in a process of converting the function block into the natural language sentence, convert the information part of the function block into the second complement of the natural language sentence based on the sixth mapping relationship.

15. The apparatus (700) according to any one of claims 10 to 14, further comprising:
a third determination module (704), configured to determine a seventh mapping relationship between a label in the natural language sentence and an instruction label of the function block, wherein the label in the natural language sentence is generated based on an execution order of the natural language sentence; wherein
the conversion module (703) is configured to: in a process of converting the natural language sentence into the function block, convert the label in the natural language sentence into the instruction label of the function block based on the seventh mapping relationship, or in a process of converting the function block into the natural language sentence, convert the instruction label of the function block into the label in the natural language sentence based on the seventh mapping relationship.

16. A conversion apparatus (500) for a natural language sentence, comprising:
at least one memory (501), configured to store computer readable code; and
at least one processor (502), configured to call the computer readable code to execute the steps of the conversion method (100) for a natural language sentence according to any one of claims 1 to 9.

17. A computer readable medium, wherein the computer readable medium stores computer readable instructions, and when the computer readable instructions are executed by a processor, the processor is enabled to execute the steps of the conversion method (100) for a natural language sentence according to any one of claims 1 to 9.

18. A computer program product, wherein the computer program product is tangibly stored on a computer readable medium and comprises computer readable instructions, and when the computer readable instructions are executed, at least one processor is enabled to execute the steps of the conversion method (100) for a natural language sentence according to any one of claims 1 to 9.
